# EUROPÄISCHE PATENTSCHRIFT

(11) **EP 1 510 376 B1**
(45) Veröffentlichungstag und Bekanntmachung des Hinweises auf die Patenterteilung: **29.04.2009**
(21) Anmeldenummer: 03292116.5
(22) Anmeldetag: 27.08.2003
(51) Int. Cl.: B60H 1/00

(54) **Klimaanlage, insbesondere für Fahrzeuge**
Air conditioning system, in particular for a motor vehicle
Système de conditionnement d'air, en particulier pour véhicule automobile

(43) Veröffentlichungstag der Anmeldung: 02.03.2005
(73) Patentinhaber: Behr France Rouffach SAS, 68250 Rouffach (FR)
(72) Erfinder: Peter, Vincent, 68190 Ensisheim (FR)
(74) Vertreter: Grauel, Andreas

(56) Entgegenhaltungen:
- EP-A- 0 768 197
- EP-A- 0 835 773
- DE-A- 19 919 132
- DE-C- 3 911 494
- US-A- 2 647 451
- US-A- 5 673 747
- US-A1- 2001 029 162
- US-B1- 6 311 763
- "INDIVIDUELL KLIMATISIEREN" ATZ AUTOMOBILTECHNISCHE ZEITSCHRIFT, FRANCKH'SCHE VERLAGSHANDLUNG. STUTTGART, DE, Bd. 101, Nr. 9, September 1999 (1999-09), Seiten 684-688, XP000847319 ISSN: 0001-2785

## Beschreibung

Die Erfindung betrifft eine Klimaanlage, insbesondere für Fahrzeuge, mit einer Luftfördereinrichtung und einem Verdampfer, wie offenbart in Zeitschrift ATZ, Bd. 101. Nr. 9, September 1999, Seiten 684-688, "INDIVIDUELL KLIMATISIEREN" (XP000847319).

Grundsätzlich besteht das Bestreben, Klimaanlagen mit kleinem Bauraum herzustellen. Dies ist insbesondere in Fahrzeugen und ganz besonders bei Zusatzklimaanlagen in Fahrzeugen von Bedeutung. Zusatzklimaanlagen sind in manchen Fahrzeugen aufgrund der geforderten Temperaturverteilung notwendig. Sie klimatisieren den Heckbereich des Fahrzeugs. Aufgrund beengter Platzverhältnisse im Fahrzeug ist gegebenenfalls nur eine asymmetrische Anordnung zur Längsmittelachse möglich, so das sich aufgrund unterschiedlich langer Kanäle für die Bestromung der rechten und linken Fahrzeughälfte unterschiedliche Massenströme und Lufttemperaturen einstellen. Um diese Unterschiede auszugleichen, werden zusätzliche Regler eingesetzt, die einerseits Platz einnehmen und andererseits Druckverluste und Geräuschentwicklungen mit sich bringen.

Der Erfindung liegt die Aufgabe zugrunde, eine Klimaanlage zu schaffen, die einen optimal kleinen Bauraum aufweist, nur einen kleinen Druckverlust besitzt und sehr geräuscharm arbeitet.

Diese Aufgabe wird erfindungsgemäß dadurch gelöst, dass dem insbesondere als Verdampfer ausgebildeten Wärmetauscher ein Trennelement zur Aufteilung des den Wärmetauscher durchströmenden, von der Luftfördereinrichtung geförderten Luftstromes in Teilluftströme zugeordnet ist. Aufgrund dieses Trennelements, das vorzugsweise als Trennwand ausgebildet ist, wird von vornherein den Symmetrie- beziehungsweise Asymmetrie-Verhältnissen Rechnung getragen, so dass sich an den Orten, an denen die Luft austritt die gewünschten Massenströme und Temperaturen einstellen. Liegt beispielsweise eine asymmetrische Einbauanordnung der Klimaanlage in einem Heck eines Fahrzeugs vor, so ist mittels des entsprechend angeordneten Trennelements eine Aufteilung des Luftstromes in Teilluftströme möglich, derart, dass beispielsweise an den B-Säulen (B1, B2) und C-Säulen (C1 und C2) die Massenströme symmetrisch austreten und -sofern gewünscht- jeweils Luft mit gleicher Temperatur ausströmt. Insbesondere ist daher eine Zweizonigkeit geschaffen, wobei das Trennelement den Wärmetauscher vorzugsweise asymmetrisch in zwei entsprechende Zonen aufteilt. Die Asymmetrie berücksichtigt die unterschiedlichen Kanallängen zu den B-und/oder C-Säulen, so dass sich eine Kompensation einstellt und insoweit die lufttechnischen Verhältnisse im Innern der Fahrzeugkabine wieder symmetrisch sind. Die Erfindung ist selbstverständlich nicht auf eine Zusatzklimaanlage oder eine Heckklimaanlage beschränkt.

Nach der Erfindung ist mindestens ein Bypass zum Einleiten von Bypassluft in mindestens einen der vom Wärmetauscher kommenden Teilluftströme vorgesehen. Durch das Zuführen von Bypassluft lässt sich der Massenstrom und die Temperatur beeinflussen. Die Bypassluft passiert den Wärmetauscher nicht und wird daher -anders als der zugehörige Teilluftstrom- nicht thermisch beeinflusst.

Auch ist vorgesehen, dass jedem Teilluftstrom ein Bypass für das Einleiten von Bypassluft zugeordnet ist, das heißt, bei der bereits erwähnten zweizonigen Ausgestaltung sind zwei Bypässe vorgesehen und der Wärmetauscher wird mittels des Trennelements in zwei Zonen unterteilt, wobei die eine Zone mit zugehörigem Bypass die linke Seite des Kraftfahrzeugs und die andere Zone mit zugehörigem Bypass die rechte Seite des Kraftfahrzeugs versorgt.

Um die Menge der zugemischten Bypassluft steuern beziehungsweise regeln zu können, weist jeder Bypass ein Bypassmischventil auf.

Ferner ist von Vorteil, in mindestens zwei der vom Wärmetauscher kommenden Teilluftströme der zugeordnete Bypassluftstrom seitlich, in einem Winkel, zugeführt wird. Dieser Winkel kann insbesondere 90° betragen. Aufgrund dieser seitlichen Zuführung der Bypassluft zum vom Wärmetauscher kommenden Teilluftstrom ergibt sich eine sehr schlanke Bauform, da die Bypassluft nicht seitlich an dem Verdampfer entlanggeführt werden muss.

Von besonderer Bedeutung ist ferner, dass die Luftfördereinrichtung eine Saugeinrichtung ist, die -in Strömungsrichtung gesehen- dem Wärmetauscher nachgeschaltet ist und insofern die Luft durch den Wärmetauscher saugt und auch die Luft durch die Bypässe saugend fördert. Insbesondere ist vorgesehen, dass die Luftfördereinrichtung zweizonig gestaltet ist, das heißt jeder Teilluftstrom mit zugehörigem Bypassluftstrom wird separat von einer Zone der Luftfördereinrichtung angesaugt. Dies kann beispielsweise dadurch erfolgen, dass die Luftfördereinrichtung mehrere, lufttechnisch nicht miteinander kommunizierende Laufräder aufweist.

Nach einer Weiterbildung der Erfindung ist vorgesehen, dass mindestens ein Bypassluftstrom kanalartig am Wärmetauscher oder einem Teil von diesem vorbeigeführt wird. Dies erfolgt jedoch nicht seitlich, sondern bevorzugt unter- oder oberhalb des Wärmetauschers, so dass sich die Seitenabmessung der Klimaanlage nicht vergrößert. Insbesondere ist die kanalartige Leitung des Bypassluftstroms mittels eines Tunnels realisiert, das heißt, die zugehörige Bypassluft untertunnelt den Wärmetauscher.

Die Zeichnungen veranschaulichen die Erfindung anhand eines Ausführungsbeispiels, und zwar zeigt:
- Figur 1: eine schematische Draufsicht auf ein mit Klimaanlage ausgestattetes Fahrzeug,
- Figur 2: eine schematische Ansicht der Luftaufteilung an einem Wärmetauscher, insbesondere Verdampfer, der Klimaanlage,
- Figur 3: ein Prinzipbild der Luftführung der Klimaanlage und
- Figur 4: eine Klimaanlage mit geöffnetem Gehäuse, wobei die obere Gehäusehälfte mit entsprechenden Einbauten nicht wiedergegeben ist.

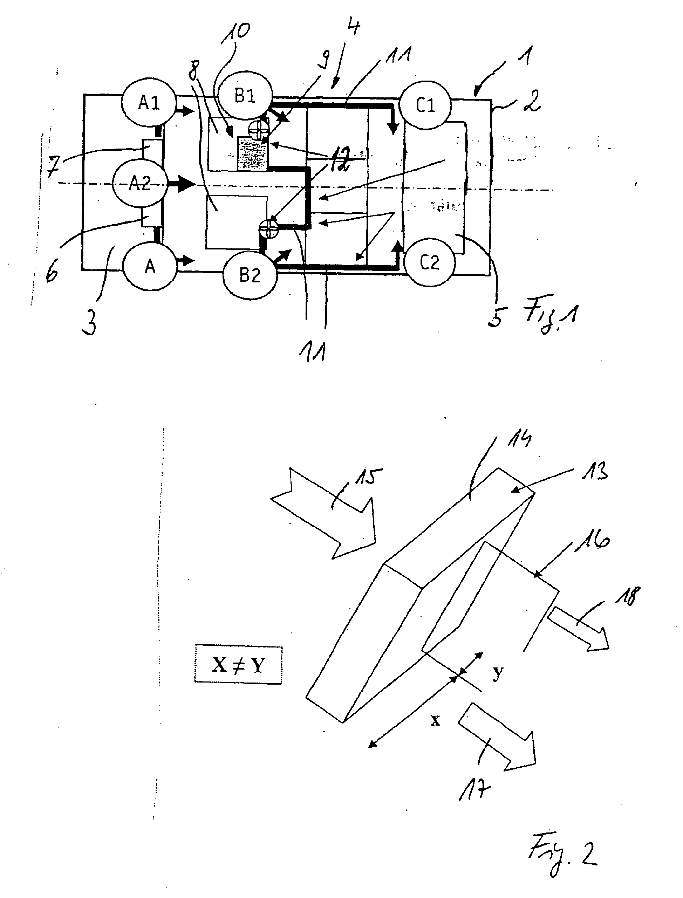

Die Figur 1 zeigt -in schematischer Darstellung- eine Draufsicht auf ein Fahrzeug 1, das als Personenkraftwagen 2 ausgebildet ist. Das Fahrzeug 1 besitzt einen Motorraum 3, eine Fahrgastzelle 4 sowie einen Kofferraum 5. Im Motorraum 3 befindet sich ein nicht dargestellter Antriebsmotor sowie eine Front-Klimaanlage 6, die eine Hauptklimaanlage 7 des Fahrzeugs 1 bildet. Sie versorgt einen linksseitigen Luftauslass A, einen rechtseitigen Luftauslass A1 sowie eine zentralen Luftauslass A2. Die Luftauslässe A, A1 und A2 sind im Bereich des Armaturenbretts des Fahrzeugs 1 untergebracht. Im Bereich der Rücklehnen der Vordersitze 8 des Fahrzeugs 1 ist auf der rechten Seite die so genannte B1-Säule und auf der linken Seite die so genannte B2-Säule der Karosserie angeordnet. Im rückwärtigen Bereich des Fahrzeugs 1 befindet sich auf der rechten Seiten die C1-Säule und auf der linken Seite die C2-Säule. Den Bezeichnungen der genannten Säulen entsprechend befinden sich Luftauslässe an diesen, das heißt, es gibt einen rechtseitigen Luftauslass B1, einen linksseitigen Luftauslass B2 sowie einen rechtseitigen Luftauslass C1 und schließlich einen linksseitigen Luftauslass C2. Die Luftauslässe B1, B2, C1 und C2 gehören einer Zusatzklimaanlage 9 an, die -im Gegensatz zur Hauptklimaanlage 7- als Heck-Klimaanlage 10 bezeichnet wird. Sie ist -wie aus der Figur 1 entnehmbar- unter dem rechten Vordersitz 8 angeordnet und versorgt -wie der Name sagt- den Heckbereich des Fahrzeugs 1. Mittels geeigneter Luftkanäle 11 und Gebläse 12 versorgt die Zusatzklimaanlage 9 die Luftauslässe B1, B2, C1 und C2.

Die Figur 2 zeigt -in schematischer Darstellung- einen als Verdampfer 13 ausgebildeten Wärmetauscher 14 der Zusatzklimaanlage 9. Es ist erkennbar, dass mittels einer nicht dargestellten Luftfördereinrichtung Luft (Pfeil 15) gefördert wird, die den Verdampfer 13 passiert. Dem Verdampfer 13 ist -in Strömungsrichtung gesehen- ein Trennelement 16 nach- oder vorgeschaltet, das die Luft (Pfeil 15) in Teilluftströme 17, 18 aufteilt, wobei die Aufteilung aufgrund einer asymmetrischen Anordnung zur Längsmittelachse des Verdampfers 13 unterschiedlich groß ist, das heißt, der Massenstrom des Teilluftstroms 17 ist größer als der des Teilluftstroms 18. Dementsprechend beträgt der Abstand des Trennelements 16 von der zugeordneten Seitenkante des Verdampfers 13 im Falle des Teilluftstroms 17 das Maß X und im Falle des Teilluftstroms 18 das Maß Y, wobei X ≠ Y ist.

Aufgrund dieser unterschiedlich großen Teilluftströme 18 ist es möglich, die aufgrund der asymmetrischen Anordnung der Zusatzklimaanlage 9 im Innern des Fahrzeugs 1 gemäß Figur 1 auftretenden unterschiedlichen Druckverluste und Temperatureinstellungen derart zu kompensieren, dass -eine gleiche Bedienpult-Einstellung der rechten und der linken Seite des Fahrzeugs vorausgesetzt-die Luftströme symmetrisch mit gleichem Massenstrom aus den zugeordneten Luftauslässen B2 und C2 beziehungsweise B1 und C1 austreten und dementsprechend auch eine gleiche Temperaturverteilung vorliegt.

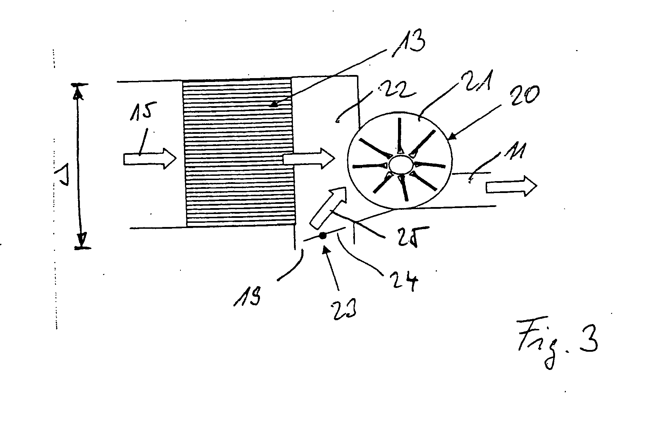

Die Figur 3 verdeutlicht -ebenfalls in schematischer Darstellung- an einigen der Bauteile der Zusatzklimaanlage 9, dass dem Verdampfer 13 ein Bypass 19 zugeordnet ist. Stromabwärts des Verdampfers 13 befindet sich die Luftfördereinrichtung 20, die dementsprechend als Saugeinrichtung 21 ausgebildet ist. Aufgrund der Saugwirkung der Luftfördereinrichtung 20 wird Luft gemäß Pfeil 15 angesaugt, die den Verdampfer 13 durchsetzt und dort abkühlt. Die Luft gelangt in einen Mischraum 22, in den der Bypass 19 mündet. Der Bypass 19 weist ein Bypass-Mischventil 23 in Form einer Mischklappe 24 auf, die mittels einer nicht dargestellten Steuer- beziehungsweise Regelungseinrichtung der Zusatzklimaanlage 9 in eine entsprechende Drehstellung eingestellt wird, so dass sich -entsprechend dieser Drehstellung- ein zugeordneter Bypassluftstrom 25 einstellt. In der Mischkammer 22 trifft die vom Verdampfer 13 kommende Luft auf die Luft des Bypassluftstromes 25 und mischt sich dort. Gemeinsam wird die Mischluft -gefördert durch die Saugwirkung der Luftfördereinrichtung 20- in den Luftkanal 11 eingebracht und von dort zu den entsprechenden Luftauslässen des Fahrzeugs 1 geleitet. In der Darstellung der Figur 3 ist das Trennelement 16 -der Einfachheit halber- nicht dargestellt. Es soll lediglich verdeutlicht werden, dass der vom Verdampfer 13 kommende Luftstrom mit dem Bypassluftstrom 25 einen Winkel einschließt, der -im gezeigten Ausführungsbeispiel- 90° beziehungsweise etwa 90° beträgt. Mithin strömt die Bypassluft seitlich in die Luft ein, die vom Verdampfer 13 kommt. Bei dieser vom Verdampfer 13 kommenden Luft kann es sich insbesondere um Teilluftströme 17 beziehungsweise 18 handeln (vergleiche Figur 2). Aufgrund dieser seitlichen Luftzuströmung lässt sich eine sehr schmale Bauform realisieren, die in der Figur 13 schematisch mit dem Maß s gekennzeichnet ist.

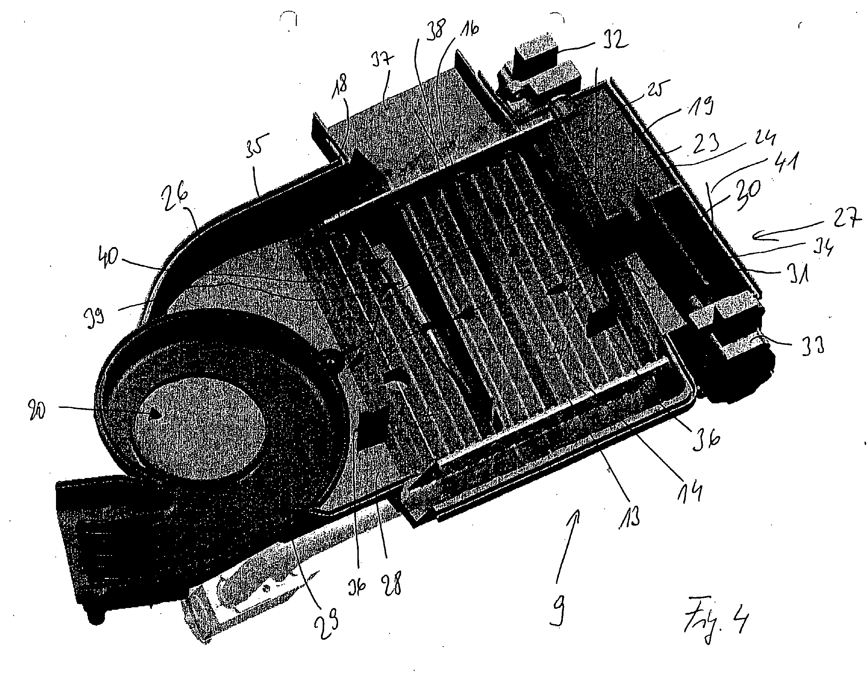

Die Figur 4 verdeutlicht -in konkreterer Darstellung- den Aufbau der Heck-Klimaanlage 10, wobei die Erfindung selbstverständlich nicht auf eine derartige Klimaanlage begrenzt ist, sondern beispielsweise auch bei Front-Klimaanlagen oder in allgemeiner Form bei Klimaanlagen angewendet werden kann.

Erkennbar ist aus der Figur 4 ein Unterteil 26 eines Gehäuses 27 der Zusatzklimaanlage 9. Es trägt in seinem Innern 28 den als Wärmetauscher 14 ausgebildeten Verdampfer 13 sowie ein Unterteil 29 der ansonsten nicht näher dargestellten Luftfördereinrichtung 20. Ferner ist ein Bypass 19 und ein Bypass 30 erkennbar. Die Bypässe 19, 30 weisen jeweils Bypass-Mischventile 23, 31 auf, die von zwei Aktuatoren 32, 33 in der Betriebsart entsprechende Stellungen gebracht sind. Die beiden Bypass-Mischventile 23 und 31 sind als Mischklappen 24 und 34 ausgebildet. Der Verdampfer 13 ist derart im Innern 28 des Gehäuses 27 der Zusatzklimaanlage 9 angeordnet, dass er einen Abstand t zur Innenseite 35 des Gehäuses 27 aufweist. Dieser Abstand t wird mittels Abstandshaltern 36 realisiert. Die Anordnung ist derart getroffen, dass der Abstand t sich in Richtung auf einen Lufteinlass 37 keilförmig vergrößert. Das als Trennwand 38 ausgebildete Trennelement 16 teilt den Verdampfer 13 in eine Zone X und eine Zone Y, wobei -wie vorstehend bereits dargelegt- eine asymmetrische Teilung realisiert ist. Über die Länge der Zone X erstreckt sich unterhalb des Verdampfers 13 der Bypass 19 in Form eines dreieckförmigen Kanals 39, das heißt, dieser Kanal 39 bildet einen Tunnel 40, der zur Zone Y des Wärmetauschers 14 führt.

Aufgrund der erwähnten Schrägstellung des Verdampfers 13 innerhalb des Gehäuses 27 ist der Querschnitt des Tunnels 40 dreieckförmig und auch die Gestalt der Trennwand 38 im Wesentlichen dreieckförmig gestaltet.

Es ergibt sich folgende Funktion: Bei in Betrieb befindlicher Luftfördereinrichtung 20 wird mittels zweier strömungstechnisch voneinander getrennter, nicht dargestellter Laufräder eine der Zone X zugeordnete Saugwirkung und eine der Zone Y zugeordnete Saugwirkung entfaltet. Dies hat in Bezug auf die Zone X zur Folge, dass Luft am Lufteinlass 37 angesaugt und -aufgrund der Wirkung der Trennwand 38 als Teilluftstrom 17 unter den Verdampfer 13 im Bereich der Zone X gelangt und dort -nach oben aufsteigend- den Wärmetauscher 14 im Bereich der Zone X durchsetzt. Auf die nunmehr gekühlte Luft trifft -über den Bypass 30- ein Bypassluftstrom 41. Die Größe dieses Bypassluftstrom 41 bestimmt sich durch den Öffnungswinkel der Mischklappe 34. Die Mischluft gelangt dann zum die Saugwirkung entfaltenden, zugeordneten Laufrad der Luftfördereinrichtung 20 und von dort in die Luftkanäle 11 zu den zugeordneten Luftauslässen B1 und C1.

In Bezug auf die Zone Y des Verdampfers 13 stellt sich folgende Luftströmung ein: Aufgrund der Sogwirkung des dieser Zone Y zugeordneten Laufrades der Luftfördereinrichtung 20 wird über den Lufteinlass 37 Luft angesaugt, die als Teilluftstrom 18 von oben über die Zone Y des Verdampfers 13 streicht und dann nach unten durch den Wärmetauscher 14 hindurchtritt. Bei entsprechend geöffneter Mischklappe 24 des Bypasses 19 tritt ein Bypassluftstrom 25 in den Bypass 19 ein und unterläuft aufgrund der Ausbildung des Tunnels 40 die Zone X des Verdampfers 13. Der Bypassluftstrom 25 tritt unterhalb der Zone Y des Verdampfers 13 aus und trifft dort auf den Teilluftstrom 18, der den Wärmetauscher 14 in der Zone Y durchsetzt hat. Dort mischen sich die beiden Luftströme und gelangen dann zum zugeordneten Laufrad der Luftfördereinrichtung 20 und von dort zu den zugeordneten Luftkanälen und zu den Luftauslässen B2 und C2.
Der Figur 4 ist deutlich entnehmbar, dass der jeweilige Teilluftstrom unter einem Winkel von etwa 90° auf den zugeordneten Bypassluftstrom trifft.

## Patentansprüche

1. Klimaanlage für Fahrzeuge, mit einer Luftfördereinrichtung und einem, insbesondere als Verdampfer ausgebildeten Wärmetauscher, wobei dem Wärmetauscher (14) ein Trennelement (16) zur Aufteilung des den Wärmetauscher (14) durchströmenden, von der Luftfördereinrichtung (20) geförderten Luftstroms in Teilluftströme (17,18) zugeordnet ist und jedem Teilluftstrom (17,18) ein Bypass (19,30) für das jeweilige Einleiten von Bypassluft zugeordnet ist, **dadurch gekennzeichnet, dass** der, einem der vom Wärmetauscher (14) kommenden Teilluftströme (17) zugeordnete Bypassluftstrom (41) unter einem Winkel seitlich des Wärmetauschers dem Teilluftstrom (17) zuführbar ist und der, einem zweiten der vom Wärmetauscher (14) kommenden Teilluftströme (18) zugeordnete Bypassluftstrom (25) unter einem Winkel seitlich des Wärmetauschers dem Teilluftstrom (18) zuführbar ist, wobei ein Teilluftstrom (17) unter den Wärmetauscher (13) eintritt und nach oben aufsteigend den Wärmetauscher (13) durchsetzt und der zweite Teilluftstrom (18) oben über den Wärmetauscher (13) streichend nach unten durch diesen durchtritt.

2. Klimaanlage nach Anspruch 1, **dadurch gekennzeichnet, dass** das Trennelement (16) den Wärmetauscher (14) derart zonal aufteilt, dass die Massenströme und/oder die Lufttemperaturen sich in gewünschter Weise in den Teilluftströmen (17,18) einstellen.

3. Klimaanlage nach einem der vorhergehenden Ansprüche, **dadurch gekennzeichnet, dass** das Trennelement (16) den Wärmetauscher (14) asymmetrisch aufteilt.

4. Klimaanlage nach einem der vorhergehenden Ansprüche, **dadurch gekennzeichnet, dass** jeder Bypass (19,30) ein Bypassmischventil (23,31) aufweiset.

5. Klimaanlage nach einem der vorhergehenden Ansprüche, **dadurch gekennzeichnet, dass** die Luftfördereinrichtung (20) als Saugeinrichtung (21) ausgebildet ist.

6. Klimaanlage nach einem der vorhergehenden Ansprüche, **dadurch gekennzeichnet, dass** mindestens ein Bypassluftstrom (25,41) kanalartig am Wärmetauscher (14) oder einem Teil von diesem vorbeigeführt wird.

7. Klimaanlage nach einem der vorhergehenden Ansprüche, **dadurch gekennzeichnet, dass** die kanalartige Leitung des Bypassluftstroms (25,41) mittels eines den Wärmetauscher zumindest bereichsweise passierenden Tunnels (40) erfolgt.

8. Klimaanlage nach einem der vorhergehenden Ansprüche, **gekennzeichnet durch** die Ausbildung als Zusatzklimaanlage (9).

9. Klimaanlage nach einem der vorhergehenden Ansprüche, **gekennzeichnet durch** die Ausbildung als Heck-Klimaanlage (10).

## Claims

1. Air-conditioning system for vehicles, with an air delivery device and a heat exchanger, in particular made as an evaporator, such that associated with the heat exchanger (14) there is a separating element (16) which divides the airstream flowing from the air delivery device (20) through the heat exchanger (14) into part-airstreams (17, 18) and with each part-airstream (17, 18) is associated a bypass (19, 30) for the respective introduction of bypass air, **characterised in that** the bypass airstream (17) associated with one part-airstream (17) coming from the heat exchanger (14) can be fed at an angle into the part-airstream (17) from the side of the heat exchanger and the bypass airstream (25) associated with a second part-airstream (18) coming from the heat exchanger (14) can be fed at an angle into the part-airstream (18) from the side of the heat exchanger (14), such that one part-airstream (17) enters under the heat exchanger (13) and passes upwards through the heat exchanger (13) and the second part-airstream (18) passed along the heat exchanger (13) from above downwards through it.

2. Air-conditioning system according to Claim 1, **characterised in that** the separating element (16) divides the heat exchanger (14) zonally in such manner that the mass flows and/or the air temperatures can be adjusted in the part-airstreams (17, 18) as desired.

3. Air-conditioning system according to either of the preceding claims, **characterised in that** the separating element (16) divides the heat exchanger (14) asymmetrically.

4. Air-conditioning system according to any of the preceding claims, **characterised in that** each bypass (19, 30) comprises a bypass mixing valve (23, 31).

5. Air-conditioning system according to any of the preceding claims, **characterised in that** the air delivery device (20) is a suction device (21).

6. Air-conditioning system according to any of the preceding claims, **characterised in that** at least one bypass airstream (25, 41) is channelled past the heat exchanger (14) or part thereof.

7. Air-conditioning system according to any of the preceding claims, **characterised in that** the bypass airstream (25, 41) is channelled by means of a tunnel (40) that passes through at least a section of the heat exchanger.

8. Air-conditioning system according to any of the preceding claims, **characterised in that** it is made as an auxiliary air-conditioning system.

9. Air-conditioning system according to any of the preceding claims, **characterised in that** it is made as a rear-end air-conditioning system.

## Revendications

1. Système de climatisation pour des véhicules automobiles, comprenant un dispositif d'alimentation d'air et un échangeur de chaleur conçu en particulier comme un évaporateur, où un élément de séparation (16) servant à la répartition, en flux d'air partiels (17, 18), du flux d'air traversant l'échangeur de chaleur (14) et fourni par le dispositif d'alimentation d'air (20), est affecté à l'échangeur de chaleur (14), et une dérivation (19, 30) prévue pour l'introduction respective d'air de dérivation est affectée à chaque flux d'air partiel (17, 18),
**caractérisé en ce que** le flux d'air de dérivation (41) affecté à l'un des flux d'air partiels (17) provenant de l'échangeur de chaleur (14) peut être fourni au flux d'air partiel (17) suivant un angle formé latéralement par rapport à l'échangeur de chaleur, et le flux d'air de dérivation (25) affecté à l'un des deuxièmes flux d'air partiels (18) provenant de l'échangeur de chaleur (14) peut être fourni au flux d'air partiel (18) suivant un angle formé latéralement par rapport à l'échangeur de chaleur, où un flux d'air partiel (17) entre sous l'échangeur de chaleur (13) et traverse l'échangeur de chaleur (13) en circulant vers le haut, et le deuxième flux partiel (18) passant sur l'échangeur de chaleur (13), depuis le haut, traverse ledit échangeur de chaleur en circulant vers le bas.

2. Système de climatisation selon la revendication 1,
**caractérisé en ce que** l'élément de séparation (16) subdivise l'échangeur de chaleur (14) en zones, de manière telle que les flux massiques et / ou les températures de l'air se présentent de manière souhaitée dans les flux d'air partiels (17, 18).

3. Système de climatisation selon l'une ou l'autre des revendications précédentes, **caractérisé en ce que** l'élément de séparation (16) subdivise l'échangeur de chaleur (14) de façon asymétrique.

4. Système de climatisation selon l'une quelconque des revendications précédentes, **caractérisé en ce que** chaque dérivation (19, 30) présente une vanne mélangeuse de dérivation (23, 31).

5. Système de climatisation selon l'une quelconque des revendications précédentes, **caractérisé en ce que** le dispositif d'alimentation d'air (20) est conçu comme un dispositif d'aspiration (21).

6. Système de climatisation selon l'une quelconque des revendications précédentes, **caractérisé en ce qu'**au moins un flux d'air de dérivation (25, 41) est dirigé, en forme de canal, en passant devant l'échangeur de chaleur (14) ou devant une partie de celui-ci.

7. Système de climatisation selon l'une quelconque des revendications précédentes, **caractérisé en ce que** la conduite du flux d'air de dérivation (25, 41), en forme de canal, est réalisée au moyen d'un tunnel (40) traversant l'échangeur de chaleur, au moins partiellement.

8. Système de climatisation selon l'une quelconque des revendications précédentes, **caractérisé par** le fait d'être configuré comme un système de climatisation supplémentaire (9).

9. Système de climatisation selon l'une quelconque des revendications précédentes, **caractérisé par** le fait d'être configuré comme un système de climatisation arrière (10).
